# EUROPÄISCHE PATENTANMELDUNG

(11) **EP 0 597 353 A2**
(43) Veröffentlichungstag der Anmeldung: **18.05.1994**
(21) Anmeldenummer: 93117723.2
(22) Anmeldetag: 02.11.1993
(51) Int. Cl.: G06F 15/70, B07C 5/34, G01N 21/88

(54) **Verfahren zur Kontrolle von Flaschenkästen und Vorrichtung zur Durchführung des Verfahrens**

(30) Priorität: 03.11.1992 DE 4237043; 20.02.1993 DE 4305328
(71) Anmelder: KRONES AG HERMANN KRONSEDER MASCHINENFABRIK, D-93073 Neutraubling (DE)
(72) Erfinder: Häring, Franz, D-93073 Neutraubling (DE)
(74) Vertreter: Grünecker, Kinkeldey, Stockmair & Schwanhäusser Anwaltssozietät

(57) **Zusammenfassung**

Es sind bereits Verfahren zur Kontrolle von Flaschenkästen bekannt, deren die Flaschen aufnehmende Fächer ein symmetrisches Gittermuster 12 besitzen, wobei die Flaschenkästen an einer Kontrollstation vorbeitransportiert werden. Die Flaschenkästen (2) werden auf Beschädigungen und Fremdkörper kontrolliert. Nachteilig ist hierbei, daß alle Ausbildungen der Gittermuster der zugeführten Flaschenkästen bei der Einstellung der Kontrollstation bekannt sein müssen und im System als Gut-Muster gespeichert werden müssen. Um dieses Problem zu lösen, wird bei dem Verfahren beim Vorbeitransport der Flaschenkästen (2) an der Kontrollstation das jeweilige Gittermuster (12) aufgenommen und in einer Auswerteschaltung (7) gespeichert. Danach wird in der Auswerteschaltung (7) die Symmetrie des jeweiligen Gittermusters (12) überprüft und ab einem gewissen Grad von der Abweichung der Symmetrie der entsprechende Flaschenkasten ausgeschieden.

## Beschreibung

Die Erfindung bezieht sich auf ein Verfahren und eine Vorrichtung zur Durchführung des Verfahrens zur Kontrolle von Flaschenkästen, deren die Flaschen aufnehmenden Fächer und Bodenverstrebungen ein symmetrisches Gittermuster bilden, wobei die Flaschenkästen an einer Kontrollstation vorbeitransportiert werden. Nach dem Stand der Technik wird ein erfaßtes Bild mit einem oder mehreren abgespeicherten Gut-Mustern verglichen (Korrelationsverfahren). In Getränkeabfüllanlagen werden derartige Verfahren angewendet, um Störungen des Betriebsablaufs zu vermeiden. Hierbei werden die Flaschenkästen auf Beschädigungen und Fremdkörper kontrolliert. Nachteilig ist hierbei, daß der Kontrollstation Flaschenkästen mit unterschiedlicher Ausgestaltung zugeführt werden können, die zum Zeitpunkt der Einstellung des Systems nicht alle bekannt sind oder noch gar nicht existieren, was zu Störungen im Betriebsablauf führt. Ein weiterer Nachteil der Korrelationsverfahren ist die benötigte Rechenleistung, die mit jeder weiteren Ausgestaltung des Gittermusters zunimmt, da mit jedem abgespeicherten Gut-Muster ein Vergleich durchgeführt werden muß.

Die Aufgabe der Erfindung besteht somit darin, ein Verfahren der eingangs genannten Art so weiterzubilden, daß sowohl Beschädigungen als auch Fremdkörper bei bzw. in Flaschenkästen erkannt werden, selbst wenn unterschiedliche Flaschenkastenmuster der Kontrollstation in ungeordneter Folge zugeführt werden.

Zur Lösung dieser Aufgabe wird erfindungsgemäß vorgeschlagen, daß bei dem eingangs genannten Verfahren beim Vorbeitransport der Flaschenkästen an der Kontrollstation das jeweilige Gittermuster erfaßt und in einer Auswerteschaltung gespeichert wird, in der Auswerteschaltung die Symmetrie des jeweiligen Gittermusters ermittelt und ab einem gewissen Grad der Abweichung von der Symmetrie ein Signal zur Ausscheidung des jeweiligen Flaschenkastens abgegeben wird.

Bei dem erfindungsgemäßen Verfahren wird die Symmetrie des Gittermusters ausgenutzt, um Beschädigungen oder Fremdkörper zu erkennen. Da unterschiedliche Gittermuster von verschiedenen Flaschenkästen aber immer eine bestimmte Symmetrie aufweisen, können Beschädigungen oder Fremdkörper auch dann erkannt werden, wenn unterschiedliche Flaschenkästen in ungeordneter Folge der Kontrollstation zugeführt werden, d.h. wenn die spezielle Ausgestaltung des Gittermusters des jeweils gerade ankommenden Kastens im vorhinein nicht bekannt ist. Das erfindungsgemäße Verfahren kann auch zur Vollkastenkontrolle eingesetzt werden, denn bei fehlenden Flaschen ist keine Symmetrie vorhanden.

Weiterhin können die für gut befundenen Flaschenkästen anschließend nach unterschiedlichen Gittermustern klassifiziert werden. Hierzu wird erfindungsgemäß vorgeschlagen, daß bei dem eingangs genannten Verfahran beim Vorbeitransport der Flaschenkästen an der Kontrollstation das zur Symmetriekontrolle bereits erfaßte und in einer Auswerteschaltung gespeicherte Gittermuster anhand eines oder mehrerer Merkmale mit den Merkmalen von mindestens einem in der Auswerteschaltung abgespeicherten Sollbild verglichen wird und bei Abweichung von dem Sollbild der jeweilige Flaschenkasten ausgeschieden wird. Werden beispielsweise in einer Abfüllanlage momentan nur Flaschenkästen mit wabenartigen Fächern benötigt, so können zur Vermeidung von Betriebsstörungen beim Einsetzen der Flaschen noch vor einer Flascheneinpackmaschine zwar für gut befundene Flaschenkästen, die allerdings keine wabenartigen Fächer besitzen, ausgeschieden werden (z.B. in ein Leerkastenmagazin).

Die Erfindung bezieht sich auch auf eine Vorrichtung zur Durchführung des erfindungsgemäßen Verfahrens mit einer Transportvorrichtung für die Flaschenkästen und einer Kontrollstation. Hierbei wird erfindungsgemäß vorgeschlagen, daß die Kontrollstation ein Bildaufnahmegerät, mindestens einen Bildspeicher und eine Auswerteschaltung aufweist, und im Aufnahmebereich des Bildaufnahmegeräts eine weiße erleuchtete Platte als Bildhintergrund angeordnet ist, welche der dem Bildaufnahmegerät abgewandten Seite der Transportvorrichtung naheliegend zugeordnet ist. Durch diesen speziellen Bildhintergrund ergibt sich ein besonders gutes und kontrastreiches Bild des Gittermusters.

Die Erfindung wird nachstehend anhand der Zeichnung näher erläutert. Hierbei stellen dar:

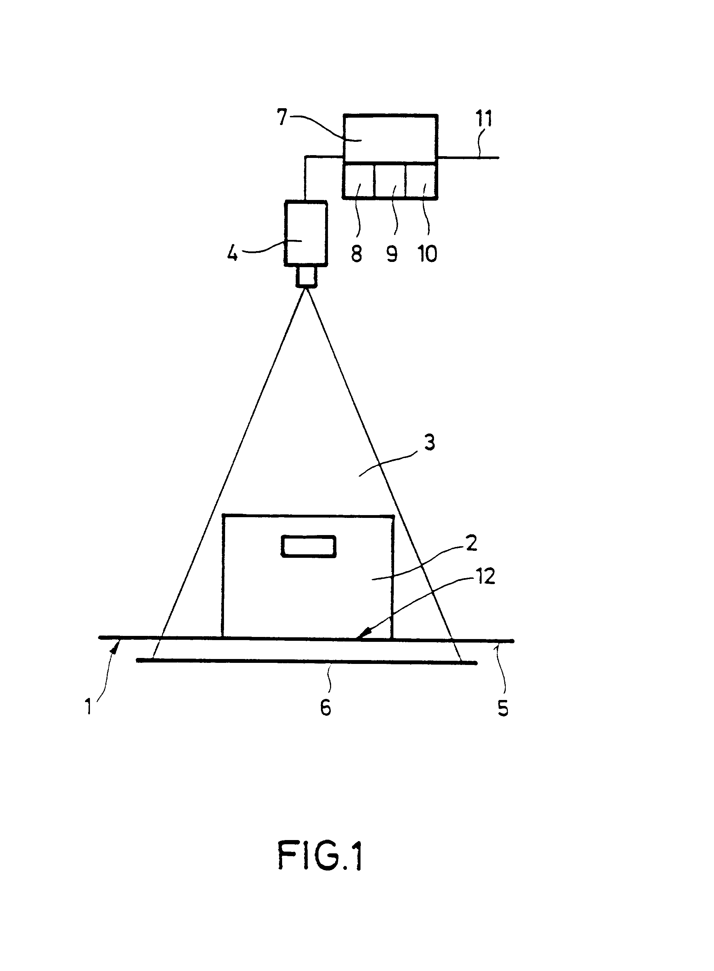

Fig. 1 eine Vorrichtung zur Durchführung des erfindungsgemäßen Verfahrens,

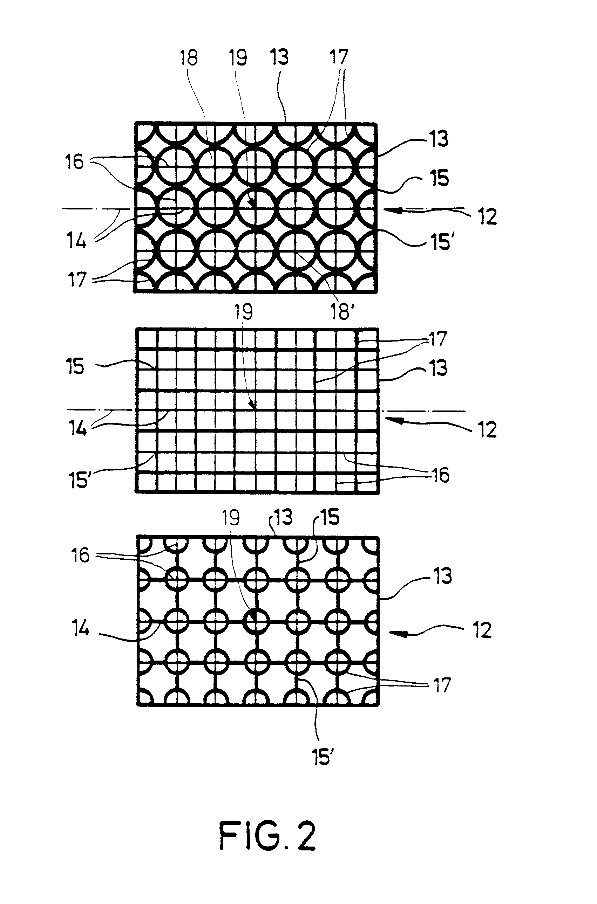

Fig. 2 unterschiedliche symmetrische Gittermuster von Flaschenkästen.

Mittels einer Transportvorrichtung 1 wird ein Flaschenkasten 2 in den Aufnahmebereich 3 eines Bildaufnahmegeräts 4 gefahren. Unterhalb des Flaschenkastens 2, der dem Bildaufnahmegerät 4 abgewandten Seite 5 der Transportvorrichtung 1 naheliegend zugeordnet, befindet sich eine weiße erleuchtete Platte 6 als Bildhintergrund. Das Bildaufnahmegerät 4 ist mit einer Auswerteschaltung 7 verbunden, welche drei Bildspeicher 8, 9, 10 enthält. Mit der Auswerteschaltung 7 ist eine Signalleitung 11 verbunden, durch welche ein Signal zum Ausscheiden eines fehlerhaften Flaschenkastens an eine nicht dargestellte Ausscheidevorrichtung abgebbar ist. Wenn die Mittellinie 14 des Flaschenkastens 2 in etwa mit der optischen Achse des Bildaufnahmegeräts 4 zusammenfällt, wird eine Aufnahme gemacht und in dem Bildspeicher 8 abgelegt. Bei dem Bildaufnahmegerät handelt es sich um eine Flächen-CCD-Kamera. Es kann jedoch auch eine Zeilenkamera eingesetzt werden, die eine Reihe von Aufnahmen des sich vorbeibewegenden Flaschenkastens macht. Die Einzelaufnahmen werden dann zu einem Gesamtbild zusammengesetzt. In beiden Fällen ist auf jeden Fall in der gespeicherten Abbildung die Symmetrie des Gittermusters 12 des Flaschenkastens 2 enthalten. Als nächstes wird das aufgenommene Grauwertbild durch Vergleich mit einem Grenzwert in ein Schwarz-Weiß-Bild umgewandelt. Anschließend wird die exakte Position, Länge und Breite des Gittermusters 12 durch Ermittlung der Außenkanten 13 festgestellt und die Mittellinie 14 (Symmetrieachse) des Gittermusters 12 ermittelt. Danach werden die beiden Bildhälften auf Übereinstimmung geprüft, indem immer jeweils zwei symmetrisch zu der ermittelten Mittellinie 14 liegende Punkte 15 und 15' verglichen werden. Eine Abweichung wird dann festgestellt, wenn ein Bildpunkt 15 weder mit dem symmetrisch liegenden Punkt 15', noch mit einem der Punkte aus einem bestimmten Umgebungsbereich, z.B. Umkreis von 2 mm, des symmetrisch liegenden Punkts 15' übereinstimmt. Die festgestellten Abweichungen werden in einem weiteren Bildspeicher 9 als Schlecht-Punkte, die Übereinstimmungen als Gut-Punkte gespeichert. Über die Schlecht-Punkte wird eine Korrektur ausgeführt, um Abweichungen, die an Grauwertkanten immer vorhanden sind, bedingt durch die beschränkte Bildauflösung, zu eliminieren. Hierzu kann ein sog. Erosionsverfahren eingesetzt werden. Dabei wird bei dem die Schlecht-Punkte (gesetze Pixel) enthaltenden (Binär-) Bild jedes gesetztes Pixel, das einen nicht gesetzten Nachbarn (Gut-Punkt) im horizontalen oder vertikalen Abstand hat, gelöscht. Die Anzahl verbleibender Schlecht-Punkte wird dann mit einem vorher eingestellten Schwellenwert verglichen. Wird der Schwellenwert überschritten, ist der geprüfte Flaschenkasten 2 nicht achsen- bzw. spiegelsymmetrisch , aber evtl. beschädigt oder beinhaltet einen Fremdkörper.

Da aber die Möglichkeit besteht, daß das Gittermuster 12 einen punktsymmetrischen Aufbau besitzt, kann, ausgehend von dem ermittelten Schwarz-Weiß-Bild des Gittermusters, das Symmetriezentrum 19 ermittelt werden. Danach können nach dem Prinzip der Rotationssymmetrie die Punkte einer Bildfläche, z.B. Punkt 18, auf Übereinstimmung oder Abweichung mit den zugeordneten, 180 Grad um das Symmetriezentrum 19 verdreht in der Bildebene liegenden Punkten, z.B. Punkt 18', oder mit in deren Umgebungsbereich liegenden Punkten verglichen werden. Das auf diese Weise erhältliche, aus Gut- und Schlecht-Punkten bestehende (Binär-) Bild kann dann entsprechend der zuvor beschriebenen Methode weiterbehandelt (Erosionsverfahren etc.) und ausgewertet werden. Liegt die Anzahl der verbleibenden Schlecht-Punkte ebenfalls über dem vorher einstellbaren Schwellenwert, ist der geprüfte Flaschenkasten nicht punkt- bzw. rotationssymmetrisch, aber evtl. beschädigt oder beinhaltet einen Fremdkörper.

Es kann sich aber auch um einen wiederverwendbaren Flaschenkasten mit einem translationssymmetrischen Gittermuster handeln. In diesem Fall kann der Symmetrievergleich, ebenfalls ausgehend von dem ermittelten Schwarz-Weiß-Bild des Gittermusters, vorgenommen werden, indem die einzelnen Punkte eines bestimmten Gitterbereichs durch Multiplikation mit einer Translationsmatrix mit den dann zugeordneten Punkten auf Übereinstimmung oder Abweichung verglichen werden. Überschreitet am Ende dieses Verfahrens die Anzahl der festgestellten Schlecht-Punkte erneut den einstellbaren Schwellenwert, besitzt der Flaschenkasten aufgrund einer Beschädigung oder Verformung keine Symmetrie mehr, oder es befindet sich ein Fremdkörper im Kasten.

Aufgrund des nur wenig Zeit beanspruchenden Symmetrievergleichs können erforderlichenfalls bei jedem Flaschenkasten alle drei Symmetriekriterien überprüft werden.

Falls nach Durchführung der Symmetriekontrolle eine Klassifizierung oder Selektion der für gut befundenen Flaschenkästen nach verschiedenen Gittermustern erfolgen soll, wird vorher das Sollbild eines Gittermusters in dem Bildspeicher 10 abgespeichert. Die Auswerteschaltung 7 ist dann in der Lage, einen Bildvergleich des aufgenommenen Gittermusters mit dem Sollbild durchzuführen. Alle nicht mit dem Sollbild übereinstimmenden Flaschenkästen können erkannt und ausgeschieden werden.

Diese Maßnahme ist dann sinnvoll, wenn eine Flascheneinpackmaschine beispielsweise gerade auf Flaschenkästen mit wabenartigem Gefache eingestellt ist. Durch Vergleich der nach der Symmetriekontrolle für gut befundenen Flaschenkästen mit einem die charakteristischen Merkmale des Wabengefaches beinhaltenden Sollbilds können alle abweichenden Flaschenkästen, z.B. mit geraden Gefachen, noch vor der Einpackmaschine ausgeschleust (Kastenmagazin) werden, wodurch Störungen vermieden werden.

## Patentansprüche

1. Verfahren zur Kontrolle von Flaschenkästen, deren die Flaschen aufnehmenden Fächer (16) und Bodenverstrebungen (17) ein symmetrisches Gittermuster (12) bilden, wobei die Flaschenkästen an einer Kontrollstation vorbeitransportiert werden, dadurch gekennzeichnet, daß beim Vorbeitransport der Flaschenkästen (2) an der Kontrollstation das jeweilige Gittermuster (12) bestimmt und in einer Auswerteschaltung (7) gespeichert wird, in der Auswerteschaltung (7) die Symmetrie des jeweiligen Gittermusters (12) ermittelt und ab einem gewissen Grad der Abweichung von der Symmetrie der jeweilige Flaschenkasten (2) ausgeschieden wird.

2. Verfahren nach Anspruch 1, dadurch gekennzeichnet, daß bei der Ermittlung der Symmetrie des Gittermusters (12) die genaue Größe und anschließend die Symmetrieachse (14) oder das Symmetriezentrum (19) des Gittermusters (12) bestimmt wird, jeweils zwei symmetrisch zur Symmetrieachse (14) oder dem Symmetriezentrum (19) liegende Bildpunkte (15, 15', 18, 18') verglichen werden und das Vergleichsergebnis abgespeichert wird.

3. Verfahren nach Anspruch 1 oder 2, dadurch gekennzeichnet, daß eine Abweichung nur dann erkannt wird, wenn ein Bildpunkt (15, 18) weder mit dem symmetrisch liegenden Punkt (15', 18'), noch mit einem der Punkte aus einem bestimmten Umgebungsbereich des symmetrisch liegenden Punkts (15', 18') übereinstimmt.

4. Verfahren nach wenigstens einem der Ansprüche 1 bis 3, dadurch gekennzeichnet, daß die an den Rändern des Gittermusters (12) toleranzbedingt auftretenden Abweichungen durch erosive Bildverarbeitungsmethoden eliminiert werden.

5. Verfahren nach Anspruch 4, dadurch gekennzeichnet, daß die korrigierten Werte der Abweichungen mit einem Schwellenwert verglichen werden und bei Überschreitung des Schwellenwerts der jeweilige Flaschenkasten (2) ausgeschieden wird.

6. Verfahren zur Kontrolle von Flaschenkästen, deren die Flaschen aufnehmenden Fächer und Bodenverstrebungen ein Gittermuster (12) bilden, wobei die Flaschenkästen an einer Kontrollstation vorbeitransportiert werden, dadurch gekennzeichnet, daß beim Vorbeitransport der Flaschenkästen an der Kontrollstation das Gittermuster (12) anhand eines oder mehrerer Merkmale bestimmt und in einer Auswerteschaltung (7) gespeichert wird, das Gittermuster (12) mit den Merkmalen von mindestens einem in der Auswerteschaltung (7) abgespeicherten Sollbild verglichen und bei Abweichung von dem Sollbild der jeweilige Flaschenkasten ausgeschieden oder auf einen Sortierkanal gebracht wird.

7. Verfahren nach wenigstens einem der vorhergehenden Ansprüche, dadurch gekennzeichnet, daß die Bestimmung des Gittermusters (12) durch eine Einzelbildaufnahme erfolgt.

8. Verfahren nach Anspruch 7, dadurch gekennzeichnet, daß die Einzelbildaufnahme erfolgt, wenn die Mittelachse des Flaschenkastens in etwa mit der optischen Achse eines Bildaufnahmegeräts zusammenfällt.

9. Verfahren nach wenigstens einem der vornergehenden Ansprüche 1 bis 6, dadurch gekennzeichnet, daß die Bestimmung des Gittermusters (12) durch eine Serie von Aufnahmen erfolgt, welche dann zu einem Gesamtbild zusammengesetzt werden.

10. Verfahren nach wenigstens einem der vorhergehenden Ansprüche, dadurch gekennzeichne, daß das Bild des Gittermusters (12) ein Grauwertbild ist, welches durch Vergleich mit einem Grenzwert in ein Schwarz-Weiß-Bild umgewandelt wird.

11. Verfahren nach wenigstens einem der vorhergehenden Ansprüche, dadurch gekennzeichnet, daß das Gittermuster (12) jedes Flaschenkastens (2) bei der Auswertung auf verschiedene Symmetrieeigenschaften, insbesondere Achsen-, Punkt- und Translationssymmetrie, überprüft wird, und vorzugsweise eine Sortierung der Flaschenkästen (2) entsprechend der festgestellten Symmetrieart oder eine Ausscheidung bei nicht feststellbarer oder fehlender Symmetrie erfolgt.

12. Vorrichtung zur Durchführung des Verfahrens nach Anspruch 1, mit einer Transportvorrichtung (1) für die Flaschenkästen (2) und einer Kontrollstation, dadurch gekennzeichnet, daß die Kontrollstation ein Bildaufnahmegerät (4), mindestens einen damit verbundenen Bildspeicher (8, 9, 10) und eine Auswerteschaltung (7) aufweist und im Aufnahmebereich (3) des Bildaufnahmegeräts (4) eine als Bildhintergrund ausgebildete Einrichtung (6) angeordnet ist, welche der dem Bildaufnahmegerät (4) abgewandten Seite (5) der Transportvorrichtung (1) naheliegend zugeordnet ist.
